# EUROPÄISCHE PATENTSCHRIFT

(11) **EP 1 561 664 B1**
(45) Veröffentlichungstag und Bekanntmachung des Hinweises auf die Patenterteilung: **11.04.2007**
(21) Anmeldenummer: 05000672.5
(22) Anmeldetag: 14.01.2005
(51) Int. Cl.: B61L 17/00, B61L 23/06

(54) **Verfahren zur Übertragung über digitale Mobilfunknetze und zur Anzeige von auf Rechnersystemen erzeugten Datentelegrammen**
Method for transmitting via digital mobile phone networks and for displaying data messages created on computer systems
Méthode pour transmettre par des résaux de téléphone mobile et pour afficher des télégrammes de données créés dans des systèmes d'ordinateurs

(30) Priorität: 03.02.2004 DE 102004005420
(43) Veröffentlichungstag der Anmeldung: 10.08.2005
(73) Patentinhaber: DB Telematik GmbH, 65760 Eschborn (DE)
(72) Erfinder: Wendler, Bodo, 04178 Leipzig (DE)
(74) Vertreter: Zinken-Sommer, Rainer

(56) Entgegenhaltungen:
- EP-A- 0 952 744
- EP-A- 1 308 366
- EP-A- 1 370 054
- WO-A-00/02758
- DE-A1- 10 041 509
- DE-U1- 20 009 263
- WEINBERGER K ET AL: "BETRIEBSVERSUCH BUENDELFUNK BEI DER DEUTSCHEN BUNDESBAHN" SIGNAL + DRAHT, TELZLAFF VERLAG GMBH. DARMSTADT, DE, Bd. 85, Nr. 1 / 2, Januar 1993 (1993-01), Seiten 38-40, XP000356406 ISSN: 0037-4997

## Beschreibung

Die Erfindung betrifft ein Verfahren zur Übertragung und Anzeige von auf zentralen Systemen der Leit- und Sicherungstechnik erzeugten, Adressierungs- und Nutzinformationen enthaltenden proprietären Datentelegrammen über digitale Mobilfunknetze auf dezentrale Mobilfunk-Endgeräte nach den Merkmalen des Oberbegriffes des Patentanspruches 1.

Die vom Eisenbahnbetrieb ausgehenden Gefahren machen überall dort, wo Menschen mittels körperlicher Anwesenheit im Gefahrenbereich der Gleise Arbeit verrichten müssen, den Einsatz von Gefahrenmeldeanlagen erforderlich. Im einfachsten Fall kommen Systeme zum Einsatz, bei denen ein optischer und / oder akustischer Alarm durch das Befahren eines definierten Gleiskontaktes ausgelöst wird. Derartige Systeme warnen beispielsweise die im Gleisbereich tätigen Bauarbeiter vor dem Herannahen einer Zugfahrt. Für derartige Situationen mit einem einfach detektierbaren Gefahrenzustand (anrückender Zug / kein anrückender Zug) sind relativ einfach gestaltete Kommunikationswege ausreichend.
Kompliziertere Verhältnisse liegen im Bereich der Rangierbahnhöfe vor, wo trotz des im Zuge des allgemeinen technischen Fortschrittes vorherrschenden Trends zur Automatisierung und Rationalisierung nach wie vor Personal - beispielsweise zum Kuppeln der Wagen und zum Legen von Hemmschuhen - im Bereich der Zugbildungsgleise tätig sein muss. Diese Mitarbeiter müssen gewarnt werden, wenn Wagen bzw. Wagengruppen beim Ablaufen vom Ablaufberg unzulässige Eigenschaften (wie z.B. zu hohe Ablaufgeschwindigkeit) aufweisen.
Da die Steuerung des Abdrückgeschehens weitgehend automatisiert mittels Computersystemen (im Folgenden als "Ablaufsteuerrechner" bezeichnet) erfolgt, wurde zu diesem Zweck eine Kommunikationsbeziehung zwischen dem zentralen Steuerungssystem (Ablaufsteuerrechner) und den mit mobilen Sende-/Empfangsvorrichtungen ausgerüsteten, dezentral im Gleisbereich tätigen Arbeitskräften implementiert, mittels der sowohl vordefinierte Statusmeldungen als auch bei auftretenden Unregelmäßigkeiten Warnmeldungen verschiedener Art an diese Personen übertragen werden. Auf Grund der großen räumlichen Ausdehnung von Rangieranlagen werden derartige Warnmeldungen nicht pauschal an alle Arbeitskräfte ausgegeben, sondern selektiv an die jeweils betroffenen Personengruppen. Im Unterschied zu den oben genannten, eher einfach strukturierten Systemen der Baustellensicherung sind bei diesem System zusätzliche Quittierungshandlungen des dezentralen Personals und / oder selbständige Quittungsmeldungen von den dezentralen Geräten und / oder Signale über den Status der dezentralen Geräte erforderlich, welche vom zentralen Steuerungssystem empfangen und als Eingangsgröße für die Steuerung der Ablauf-Rangieranlage berücksichtigt werden müssen.
Gemäss dem aktuellen Stand der Technik sind derartige sogenannte "Kupplerwarnanlagen" mittels analoger Funktechnik realisiert. Die Mitarbeiter im Gleisbereich sind mit analogen Sprechfunkgeräten ausgestattet, mittels derer im Bedarfsfall steuerbare akustische und optische Warnsignale ausgegeben werden. Die Übertragung dieser Warnsignale sowie der zugehörigen Status- bzw. Quittierungssignale erfolgt mittels definierter Datentelegramme von und zum Ablaufsteuerrechner. Die dezentralen Sprechfunkgeräte werten selbständig die vom zentralen Ablaufsteuerungsrechner übertragenen Daten bzw. Informationen aus und generieren hieraus die erforderlichen Ausgaben bzw. Anzeigen (z.B. Quittungssignale).

Vor dem Hintergrund der schon weit vorangeschrittenen Digitalisierung in der Telekommunikation ist es nunmehr erforderlich, die bisherigen für den Analogfunk genutzten Frequenzen zu Gunsten der Frequenzen des digitalen Mobilfunkstandards GSM-R aufzugeben.
Hinsichtlich eines derartigen Systemwechsels vom Analog- zum Digitalfunk wäre es zunächst naheliegend, ein Verfahren einzusetzen, bei dem - in Analogie zu der bisherigen Analogfunk-Systemlösung - in den Mobilfunk-Endgeräten eine selbstständige Auswertung der vom Ablaufsteuerrechner übertragenen Daten bzw. Informationen sowie deren Anzeige erfolgt. Die Anwendung eines solchen Verfahrens hat den Vorteil, das beim empfangenden Mobilfunk-Endgerät alle Informationen über den Status der Verbindung sowie über den Status des Endgerätes vorliegen und im Bedarfsfall im Mobilfunk-Endgerät autark vordefinierte Status- und Warnmeldungen für den spezifischen Anwendungsfall generiert werden können. Für ein solches Verfahren wird eine das zentrale proprietäre System (Ablaufsteuerrechner) und das digitale Mobilfunknetz verbindende Vorrichtung verwendet,
- bei der sich die Mobilfunk-Endgeräte zum Herstellen eines aktivierten Überwachungsmodus, in dem sie Status- und Warnmeldungen entgegennehmen können, "einwählen" und somit eine Datenverbindung hergestellt wird,
- die die proprietären Datentelegramme des zentralen Systems (Ablaufsteuerrechner) in einen bestehenden "gewöhnlichen" verbindungsorientierten transparenten Datenkanal des digitalen Mobilfunknetzes leitet
- und die eingebetteten Datentelegramminhalte auf die einzelnen Datenkanäle zu den digitalen Mobilfunk-Endgeräten verteilt.
Alternativ wäre es naheliegend, wenn diese Vorrichtung die proprietären Datentelegramme des zentralen Systems in IP (Internet Protocol) - Datenpakete einbringt und z.B. mittels eines marktüblichen IP-Routers über GPRS-Kanäle an die digitalen Mobilfunk-Endgeräte verteilt. Eine derartige Lösung bedingt jedoch erhebliche Aufwendungen im Bereich der Mobilfunk-Endgeräte, da diese selbständig die proprietären Datentelegramme auswerten sowie daraus akustische und/oder optische Meldungen generieren und quittieren müssten. Speziell bei Endgeräten, welche für die Applikationen des im Eisenbahnwesen anzuwendenden GSM-R-Standards adaptiert sind, würde ein solches Konzept erheblichen Entwicklungs- und Anpassungsaufwand nach sich ziehen.
Ein weiteres naheliegendes Systemkonzept besteht darin, die gestellten spezifischen funktionalen Anforderungen an die Mobilfunk-Endgeräte durch eine externe Vorrichtung, die - z.B. über eine Datenschnittstelle - mit dem Mobilfunk-Endgerät verbunden ist, zu lösen. Durch die zusätzliche Vorrichtung wird das Gewicht der vom Rangierpersonal mitzuführenden digitalen Mobilfunk-Endgeräte nachteilig erhöht. Weiterhin bildet die physikalische Datenverbindung von Mobilfunk-Endgerät und zusätzlicher Vorrichtung eine störanfällige Schwachstelle in dem durch widrige Umgebungsparameter gekennzeichneten Eisenbahnrangierbetrieb. Zusätzlich erhöhen sich der Bereitstellungs- und Wartungsaufwand sowohl für die Stromversorgung der zusätzlichen Vorrichtung als auch für die Vorrichtung selbst.
Andere naheliegende Konzepte, die z.B. eine direkte funktionale und physikalische Kopplung des Ablaufsteuerungsrechners an ein digitales Mobilfunknetz oder zumindest eine direkte Adressierbarkeit der anzusprechenden Mobilfunk-Endgeräte über ein digitales Mobilfunknetz bezwecken, würden jedoch Eingriffe sowie Änderungen bei der Hard- und Software des Ablaufsteuerrechners nebst dessen Schnittstellen zu den übertragungstechnischen Komponenten mit sich bringen. Da diese in hohem Masse proprietär konzipiert sind und einem aufwändigen Zulassungsprocedere durch die Aufsichtsbehörden unterliegen, sind derartige Ansätze jedoch schon aus diesem Grund wirtschaftlich nicht vertretbar.

Weitere naheliegende Konzepte, die eine Übertragung der Datentelegramme oder deren Informationsinhalte über digitale Mobilfunknetze auf Basis vom Kurzmittelungsdiensten (SMS) realisieren, auch in Verbindung mit SMS-basierten pro-aktiven Dienstebefehlen an die SIM-Karte und das Mobilfunk-Endgerät zur Generierung von Textanzeigen und Quittungskurzmitteilungen, würden aufgrund der unbestimmt zeitverzögert erfolgenden Übertragung von Kurzmitteilungen in digitalen Mobilfunknetzen die erforderliche Echtzeitinformationsübertragung nicht erfüllen können. Dabei wäre ebenfalls noch eine zusätzliche, den Ablaufsteuerungsrechner und das digitale Mobilfunknetz verbindende Vorrichtung erforderlich.

Aus der EP 1 308 366 A1 ist eine Vorrichtung zur Rottenwarnung bekannt, bei dem ein Schnittstellenmodul an ein Stellwerk angeschlossen ist. Dieses Schnittstellenmodul empfängt vom Stellwerk aktuelle Informationen über die Zeit-Weg-Diagramme von Zug- und Rangierfahrten im Stellbereich dieses Stellwerkes und vergleicht diese mit Belegungsinformationen über Gleisebereiche, in denen Gleisbauarbeiter tätig sind. Wenn sich eine Zugfahrt einer solchen Baustelle nähert, wird - gesteuert durch das Schnittstellenmodul -ein Warnsignal per Funk an die Gleisbauarbeiter übermittelt. Die Gleisbauarbeiter sind mit entsprechenden Geräten zum Empfang solcher Warnsignale (z.B. GSM-R-Mobilfunkgeräte) ausgestattet. Nur nach Rückübermittlung einer Quittierung über den Empfang des Warnsignales kann das relevante Gleis auf der Stellwerksebene für eine Zugfahrt freigegeben werden. Ein solches System erweist sich in der praktischen Anwendung jedoch als problembehaftet, da für die Stellwerksebene nicht interpretierbar ist, ob ein Ausbleiben des Quittierungssignales auf tatsächliche bauliche Aktivitäten im Gleisbereich zurückzuführen ist (das Gleis also baubedingt noch nicht geräumt werden kann), oder ob stattdessen eine Fehlfunktion beim Schnittstellenmodul, bei einem der angerufenen Mobilfunk-Endgeräte oder aber bei dem für die Datenübertragung genutzten Mobilfunknetz vorliegt. Gegebenenfalls kann es zu "Dead-Lock"-Situationen kommen, wenn das Stellwerk wegen eines fehlenden Quittierungssignales den Fahrweg für eine Zugfahrt nicht freigeben kann, zugleich aber auch die Gleisbauarbeiter auf die (nicht stattfindende) Zugfahrt warten.

Der Erfindung liegt deshalb die Aufgabe zugrunde, ein Verfahren zur Übertragung und Anzeige von auf zentralen Systemen der Leit- und Sicherungstechnik erzeugten, proprietären Datentelegrammen über digitale Mobilfunknetze nach den Merkmalen des Oberbegriffes des Patentanspruches 1 zu realisieren, bei dem zum einen auf Änderungen an der Hard- und Software des zentralen Systems, an dessen Schnittstellen zu den übertragungstechnischen Komponenten, an den benutzten Schnittstellenprotokollen, an den Mobilfunk-Endgeräten sowie im Bereich des digitalen Mobilfunknetzes verzichtet werden soll, zum anderen aber auch zugleich undefinierte Betriebszustände, die durch nicht vorhandene Fehlerbehandlungsroutinen in diesen nicht zu verändernden Komponenten hervorgerufen werden können, vermieden werden sollen.

Diese Aufgabe wird erfindungsgemäß in Verbindung mit dem Oberbegriff des Patentanspruches 1 dadurch gelöst, dass im Kommunikationsserver aus Statusinformationen des Kommunikationsservers und Signalisierungsinformationen des digitalen Mobilfunksystems Kenngrößen zur Überwachung der einzelnen Komponenten und Übertragungskanäle des digitalen Mobilfunksystems oder aus Status- und Signalisierungsinformationen des Kommunikationsservers Kenngrößen zur Überwachung der einzelnen Komponenten und Funktionalitäten des Kommunikationsservers generiert werden.
Dies ist immer dann relevant, wenn eine Überwachung des Kommunikationsservers und / oder des Mobilfunknetzes mit dessen Komponenten erforderlich ist und zu diesem Zweck Informationen und / oder Kenngrößen über den Zustand dieser Komponenten bereitzustellen sind. Diese Informationen und / oder Kenngrößen werden mit Hilfe des Kommunikationsservers auf Basis dessen intern erzeugter Statusinformationen und / oder durch Auswertung der vom digitalen Mobilfunknetz an den Kommunikationsserver übertragenen, den Zustand des digitalen Mobilfunknetzes und seiner Komponenten beschreibenden Signalisierungsinformationen generiert. Dieses Merkmal kommt ebenso zur Anwendung, wenn das proprietäre zentrale System über keine eigenen Mittel verfügt, mit Hilfe der Statusinformationen des Kommunikationsservers und / oder der zum zentralen System übertragbaren Signalisierungsinformationen des digitalen Mobilfunksystems Kenngrößen zur Überwachung der einzelnen Komponenten und Übertragungskanäle des digitalen Mobilfunksystems zu generieren.
Dadurch ist zum einen eine Überwachung der Funktionen des Kommunikationsservers selbst und / oder eine Bereitstellung von Informationen und / oder Kenngrößen bezüglich des Zustandes des Kommunikationsservers mit seinen Komponenten und Funktionen für übergeordnete Überwachungs- oder Kenngrößen möglich.

Eine sinnvolle Ergänzung des erfinderischen Gedankens sieht vor, dass die vom zentralen System ausgegebenen proprietären Adressierungsinformationen mittels des Kommunikationsservers in Ziel-Rufnummern der angesprochenen dezentralen Mobilfunk-Endgeräte und / oder in selektive Gruppen- und / oder Sammelrufnummerierungen, denen die angesprochenen dezentralen Mobilfunk-Endgeräte zugehören, umgewandelt werden.

Dadurch wird es ermöglicht, einerseits real existente Adressen aus den proprietären Adressinformationen zu erhalten und zugleich ein selektives Ansprechen der dezentralen Mobilfunk-Endgeräten für die gemäß der proprietären Adressierungsinformationen betroffenen Personengruppen zu ermöglichen. Vorteilhafterweise ist der Kommunikationsserver dahingehend konfigurierbar, ob die anzusprechenden Mobilfunk-Endgeräte einzeln über ihre Ziel-Rufnummer und / oder über selektive Gruppen- und / oder Sammelrufnummerierungen, denen die Mobilfunk-Endgeräte (konfigurierbar) zugehören, und / oder auch in Abhängigkeit vom Inhalt der proprietären Adressinformationen angesprochen werden.

Die Erfindung schlägt ergänzend vor, dass die durch den Kommunikationsserver in Abhängigkeit der vom proprietären zentralen System ausgegebenen Nutzinformationen zugewiesenen Ereignistypen in Sprachmeldungen oder Töne umgewandelt werden.
Dieser Realisierungsansatz ist zweckmäßig für Mobilfunk-Endgeräte, zu denen bestimmte Formate von Ereignistypen wie beispielsweise Datenmuster oder Datenstrukturen nicht übertragen und / oder von denen derartige Formate von Ereignistypen nicht ausgewertet, ausgegeben und /oder angezeigt werden können. Ebenso kann dieser Realisierungsansatz dann angewendet werden, wenn das digitale Mobilfunknetz und / oder der aktivierte Netzdienst bevorzugt Sprachdienste unterstützt bzw. Dienste, die nicht das Übertragen von Sprachinformation zum Gegenstand haben, nicht unterstützt.

Gemäss einer weiteren Ausprägung des erfinderischen Konzeptes werden die Kenngrössen zur Überwachung des digitalen Mobilfunksystems durch den Kommunikationsserver in auf dem zentralen System implementierte proprietäre Überwachungsalgorithmen eingebracht.
In der Praxis ist dies immer dann vorteilhaft, wenn die vom proprietären zentralen System zur Überwachung der peripheren übertragungstechnischen Komponenten (z.B. die Komponenten des digitalen Mobilfunknetzes) verwendeten proprietären Überwachungsalgorithmen und Kenngrößen durch diese peripheren übertragungstechnischen Komponenten nicht verarbeitet bzw. nicht übertragen und / oder im Sinne einer Quittierung selbständig beantwortet werden können. Die vom Kommunikationsserver zur Überwachung des digitalen Mobilfunksystems generierten Kenngrößen werden deshalb mit Hilfe des Kommunikationsservers in die für die Überwachungsalgorithmen relevanten proprietären Datentelegramme des zentralen Systems unter Beachtung der Erfordernisse (Zeit, Format) eingebracht. Damit wird in jenem Fall erreicht, dass die prorietären Überwachungsalgorithmen beispielsweise auf solche, zum Zweck der Überwachung vom zentralen System ausgesandten Datentelegramme korrespondierende Quittungstelegramme mit Überwachungskenngrößen empfangen und weiterverarbeiten können.

In Erweiterung der erfinderischen Grundidee werden die beim Absetzen von an den Kommunikationsserver gerichteten Rufen der dezentralen Mobilfunk-Endgeräte über das digitale Mobilfunknetz bereitgestellten Signalisierungsinformationen als Konfigurationsdaten zur Herstellung von Rufgruppen- und / oder Ortsbezügen der dezentralen Mobilfunk-Endgeräte im Kommunikationsserver gespeichert.
Mit dieser funktionalen Erweiterung kann der Kommunikationsserver von Mobilfunk-Endgeräten zum Zweck der Konfiguration eingehende Anrufe bzw. Verbindungsanforderungen entgegennehmen. Der Kommunikationsserver wertet dabei die von einem dezentralen Mobilfunk-Endgerät bzw. vom Mobilfunknetz zum Kommunikationsserver übertragenen Signalisierungsinformationen und / oder definierten Konfigurationskenngrößen in vordefinierter Weise aus und generiert daraus abspeicherbare bzw. reproduzierbare Konfigurationsdaten, die die Zuordnung des dezentralen Mobilfunk-Endgerätes zu Rufgruppen und / oder Einzelverbindungen und / oder Aufenthaltsorten beschreiben. Diese Konfigurationsdaten dienen dann für eine spätere Verbindungsherstellung und Informationsübertragung zwischen dem zentralen proprietären System und den einzelnen dezentralen Mobilfunk-Endgeräten bzw. Rufgruppen.

Schliesslich werden die vom zentralen System ausgesandten Datentelegramme zur Überprüfung der Funktionsfähigkeit eines dezentralen Mobilfunk-Endgerätes durch den Kommunikationsserver nach Auswertung der im Kommunikationsserver vorliegenden Statusinformationen bezüglich des digitalen Mobilfunknetzes sowie des dezentralen Mobilfunk-Endgerätes bei Bestehen einer aktiven Verbindung zwischen Kommunikationsserver und dezentralem Mobilfunk-Endgerät quittiert, wobei durch den Kommunikationsserver seitens des zentralen Systems verarbeitbare Statusmeldungen generiert und an das zentrale System übertragen werden.
Dieser Realisierungsansatz ist erforderlich für dezentrale Mobilfunk-Endgeräte, die die vom zentralen System ausgesandten prorietären Datentelegramme zur Überprüfung ihren Funktionsfähigkeit und / oder zur Überprüfung des Übertragungskanals nicht empfangen und / oder verarbeiten und / oder quittieren können.
Vorteilhaft kann der Kommunikationsserver deshalb eingesetzt werden, um aus den vorher vom Kommunikationsserver erzeugten Statusinformationen bzgl. Mobilfunknetz, Mobilfunk-Endgeräte(n) und bestehender aktiver Verbindung zwischen Kommunikationsserver und Mobilfunk-Endgerät derartige Quittungsinformationen (Statusinformationen) zu erzeugen und an das zentrale System zu übertragen, die vom zentralen System als Antwort auf die zur Überprüfung der Funktionsfähigkeit eines dezentralen Mobilfunk-Endgerätes ausgesandten Datentelegramme erwartet werden.
Es entsteht so in vorteilhafter Weise mit Hilfe des Kommunikationsservers eine funktionale Nachbildung der von den proprietären Überwachungsalgorithmen des zentralen Systems vorzunehmenden transparenten Überprüfung der Ende-zu-Ende-Funktionalität zwischen zentralem System und dem mindestens einen dezentralen Mobilfunk-Endgerät.

Weitere Unteransprüche beschreiben die vorteilhafte Ausgestaltung des erfindungsgemässen Kommunikationsservers mit einer zusätzlichen Funktionalität als Nebenstellenanlage, so dass eine Sprachverbindung zwischen einem Bediener des zentralen Systems und mindestens einem dezentralen Mobilfunk-Endgerät vermittelt und übertragen werden kann.

Anhand eines Ausführungsbeispieles soll nachstehend die Erfindung näher erläutert werden. Dabei zeigen:

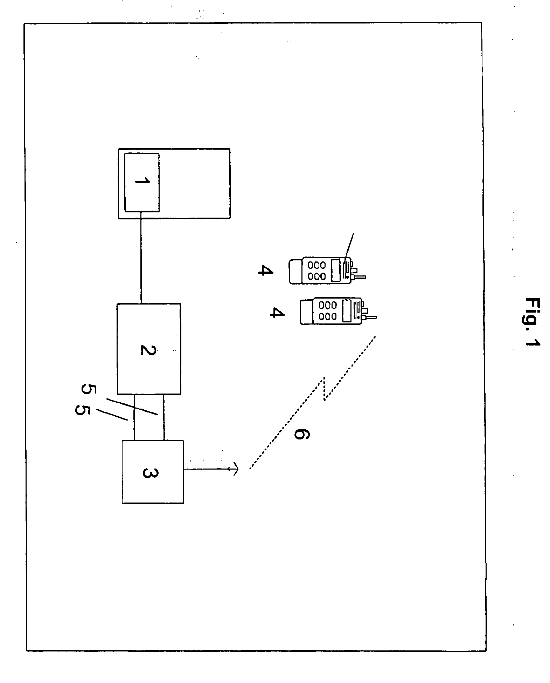

- Figur 1:: Prinzipdarstellung einer Kuppler-Warnanlage unter Verwendung von Analogfunk
- Figur 2:: Prinzipdarstellung einer erfindungsgemässen Kuppler-Warnanlage

In einem Rangierbahnhof sind auf jedem Richtungsgleis jeweils eine als Kuppler eingesetzte Arbeitskraft tätig. Jeder Kuppler ist mit einem analogen Sprechfunkgerät (4) ausgerüstet. Vor Beginn der Arbeiten meldet sich der Kuppler beim Bergmeister (1) an, der das Abdrücken der zu zerlegenden Züge am Ablaufberg steuert und damit die zentrale Steuerungsinstanz der Rangiervorgänge darstellt. Üblicherweise erfolgen das Abdrücken, das Einstellen der Laufwege für die abgedrückten Wagen bzw. Wagengruppen in die unterschiedlichen Richtungsgleise sowie deren gezieltes Abbremsen in den Richtungsgleisen weitgehend automatisiert durch einen zentralen Steuerrechner ("Ablaufsteuerrechner") (2), der durch den Bergmeister beaufsichtigt wird. Der Ablaufsteuerrechner (2) ist mittels zweier redundanter serieller Schnittstellen (RS 232) (5) mit einem Funkteil (3) verbunden, welches den Funkkontakt mit den Sprechfunkgeräten (4) herstellt. Mit der Anmeldung beim Bergmeister (1) teilt jeder Kuppler seine Örtlichkeit (zugewiesenes Richtungsgleis) sowie seine Funkgerätenummer mit. Die logische Verknüpfung von Funkgerätenummer und Richtungsgleisnummer wird im Ablaufsteuerrechner (2) hinterlegt und abgespeichert. Sobald die Kuppler-Warnanlage vom Bergmeister aktiviert ist, wird dies optisch und akustisch an den Sprechfunkgeräten (4) angezeigt. Solange die Kupplerwarnanlage aktiv ist, erfolgt in kurzen zeitlichen Abständen durch zyklische Telegrammwiederholung seitens des Ablaufsteuerrechners eine Prüfung der bestehenden Funkverbindung (6). Bei Ausfall der Verbindung erfolgt eine optische und akustische Ausfallwarnung sowohl auf Seiten des dezentralen Sprechfunkgerätes (4) als auch auf Seiten des zentralen Ablaufsteuerrechners (2). Ebenso wird die Verbindung zwischen Funkteil (3) und Ablaufsteuerrechner (2) zyklisch auf Betriebsfähigkeit überwacht. Das Auslösen einer Warn-, Gefahren- oder Entwarnungsmeldung wird vom Ablaufsteuerrechner (2) erzeugt und dem Funkteil (3) zugeführt, welcher die Aussendung an die örtlich betroffenen Sprechfunkgeräte (4) ausführt. Dem Kuppler verbleiben dann noch circa 30 Sekunden zum Verlassen des Gleisbereiches. Telegramme für Gefahrenmeldungen werden durch das Funkteil (3) solange zyklisch ausgesendet, bis der Ablaufsteuerrechner (2) eine Entwarnung übermittelt. Nach Abschluss der Arbeiten im Richtungsgleis meldet sich der Kuppler beim Bergmeister (1) mittels normalen Sprachfunks ab, woraufhin der Bergmeister die Kupplerwarnanlage deaktiviert.

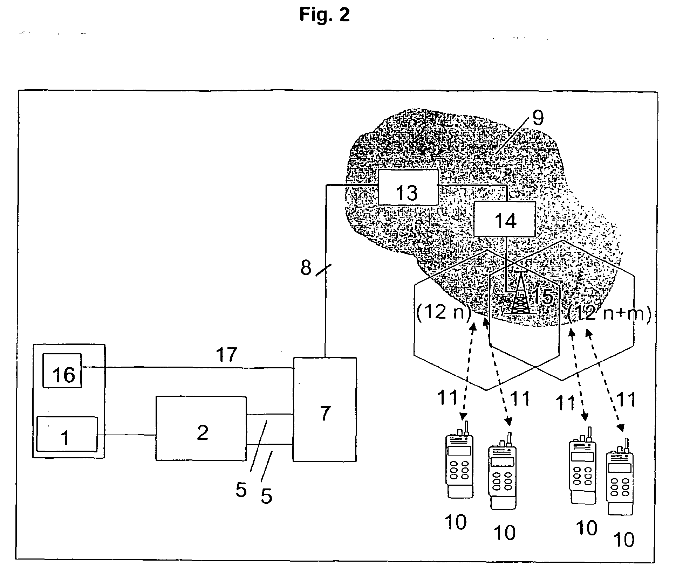

Der in Figur 2 dargestellte erfindungsgemäße Lösungsansatz einer Kuppleranlage verwendet im Rahmen der Migration des Analogfunks zum digitalen Mobilfunk nach dem GSM-R Standard neben einem digitalen Mobilfunknetz (9) und den dezentralen digitalen Rangierfunk-Endgeräten (10) einen Kommunikationsserver (7).
Zusammen mit dem digitalen Mobilfunknetz (9) ersetzt der Kommunikationsserver (7) zum einen die übertragungstechnischen Funktionen des analogen Funkteils (3). Die analogen Sprechfunkfunkgeräte (4) sind nunmehr durch digitalen Rangierfunkgeräte (10) ersetzt, mit denen jeder Rangierarbeiter / Kuppler ausgerüstet ist.
Der Kommunikationsserver ist dabei über die beiden redundant ausgeführten seriellen Schnittstellen (RS232) (5) mit dem Ablaufsteuerrechner (2) und über eine S2M-ISDN-Schnittstelle (8) mit dem Mobilfunknetz verbunden. Optional erfolgt eine Verbindung der Sprechstelle des Bergmeisters (16) mit dem Kommunikationsserver über eine einfache ISDN-Verbindung (17).
An diesem vereinfachten Ausführungsbeispiel sollen wesentliche Abläufe näher erläutert werden.
Der Kommunikationsserver (7) ist mit vordefinierten Adressdaten der Rangierfunk-Endgeräte (die auch dem Bergmeister (1) bekannt sind), vordefinierten Netzdiensten, vordefinierten ereignis- und ortsbezogenen Sprachmeldungen (wie z.B. Warn-, Gefahren- oder Entwarnungsmeldung) und vordefinierten Tonfolgen konfiguriert, die in der Datenbasis des Kommunikationsservers gespeichert sind.
Vor Beginn der Arbeiten im Gleisbereich meldet sich der Kuppler über Sprechfunk (hier: GSM-R Mobilfunknetz) beim Bergmeister an. Mit dieser Anmeldung beim Bergmeister (1) teilt jeder Kuppler seine Örtlichkeit (das zugewiesene Richtungsgleis) sowie die Rufnummer seines Rangierfunkgerätes mit. Der Bergmeister nimmt anhand der auch ihm bekannten Vorkonfiguration des Kommunikationsserver (7) eine logische Zuordnung der Rufnummer des Rangierfunkgerätes (10) zu der vom - gegenüber dem analogen Ausgangszustand unverändert belassenen - Ablaufsteuerrechner (2) nebst Bergmeisterarbeitsplatz (1) erwarteten proprietären "Funkgerätenummer" (Nummer des Funkgerätes) vor. Anschließend wird die logische Verknüpfung von prorietärer Funkgerätenummer und Richtungsgleisnummer wie bisher im Ablaufsteuerrechner (2) hinterlegt und abgespeichert. Sobald die Kuppler-Warnanlage vom Bergmeister aktiviert ist, sendet der Ablaufsteuerrechner (2) mittels proprietärer Datentelegramme eine Aktivierungsmeldung, die an dem betroffenen Rangierfunk-Endgerät (10) akustisch anzuzeigen ist. Da in einem digitalen Mobilfunknetz im Gegensatz zur bisherigen analogen Lösung kein ständiges Übertragungskanal (11) aktivierbart ist und die verwendeten digitalen Rangierfunk-Endgeräte (10) die proprietären Datentelegramme weder auswerten noch anzeigen können (und auch die in den vom Ablaufsteuerrechner ausgesandten proprietären Datentelegrammen enthaltenen Adressinformationen nicht zur Adressierung und Verbindungssteuerung in digitalen Mobilfunknetzen geeignet sind), kommt dem Kommunikationsserver (7) eine diesen Mangel kompensierende Funktion zu.
Im ersten Schritt analysiert die Software des Kommunikationsserver (7) jedes vom Ablaufsteuerrechner (2) über die serielle Schnittstelle (5) eingehende proprietäre Datentelegramm mittels Protokolldekodierung und extrahiert die enthaltenen vordefinierten Nutzinformationen und Adressdaten. Anhand der in der Aktivierungsmeldung enthaltenen Adressdaten (proprietäre Funkgerätenummer) und der Adressdaten- / Rufnummernzuordnung in der Datenbasis des Kommunikationsserver (7) prüft dessen Software, ob bereits eine der vordefinierten Verbindungen (hier z.B. eine Punkt-zu-Punkt Sprachkanalverbindung) zu der vordefinierten Zielrufnummer für die Rangierablaufüberwachung über das Mobilfunknetz (9) zum Rangierfunk-Endgerät (10) aktiv ist.
Besteht noch keine aktive Verbindung zu der vordefinierten Zielrufnummer des dezentralen Mobilfunk-Endgerätes (10), selektiert die Software des Kommunikationsservers (7) mit Hilfe dessen Datenbasis den für diese Verbindung erforderlichen vordefinierten Netzdienst (hier z.B. eine Punkt-zu-Punkt Sprachkanalverbindung) und aktiviert den Netzdienst durch Aufbau einer solchen Verbindung über das digitale Mobilfunknetz (9) unter Verwendung der vordefinierten Zielrufnummer.
Sobald die Verbindung verfügbar ist, fügt die Software des Kommunikationsservers (7) die extrahierten Nutzinformationen (proprietär kodierte Aktivierungsmeldung der Kupplerwarnanlage und die Angaben Richtungsgleisnummer und proprietärer Funkgerätenummer) sowie informativ (da z.B. bahnbetrieblich vereinbart) die aus der Adressdaten / Rufnummernzuordnung extrahierte Zielrufnummer des dem Kuppler zugeordneten Rangierfunkgeräts (10) zu einem, das Ereignis "Aktivierung der Kupplerwarnanlage" inhaltlich (z.B. gemäß der bahnbetrieblichen Vorgaben) vollständig beschreibenden Informationstyp zusammen. Dieser Ereignistyp "Aktivierung der Kupplerwarnanlage" wird anschließend vom Kommunikationsserver (7) in eine korrespondierende Sprachmeldung, zusammengesetzt aus vordefinierten und in der Datenbasis des Kommunikationsservers (7) gespeicherten Sprach-Samples, umgewandelt. Der Kommunikationsserver übertragt diese Sprachmeldung alternierend mit einer vordefinierten, dem Ereignistyp "Aktivierung der Kupplerwarnanlage" zugewiesenen Tonfolge (da dieses z.B. bahnbetrieblich vorgegeben wurde; beispielsweise zweifach) über die Sprachkanalverbindung des digitalen Mobilfunknetzes (9) zu dem betroffenen Rangierfunk-Endgerät (10), welches diese Sprachmeldung und die Tonfolge(n) schließlich akustisch ausgibt.
Vom Ablaufsteuerrechner (2) ausgelöste Warn-, Gefahren- oder Entwarnungsmeldungen sowie die Deaktivierungsmeldung werden äquivalent behandelt.
Solange die Kupplerwarnanlage aktiv ist, erfolgen wie bisher in kurzen zeitlichen Abständen zyklische Telegrammwiederholungen seitens des Ablaufsteuerrechners zur Prüfung und Überwachung der bestehenden Verbindung zu den dezentralen Mobilfunk-Endgeräten (10). Aus diese zyklischen Telegrammen generiert der Kommunikationsserver (7) nach dem oben beschriebenen Verfahren Überwachungstonfolgen, die über das Mobilfunknetz (9) übertragen und auf den betroffenen dezentralen Rangierfunk-Endgeräten ausgegeben wird, um dem im Gleisbereich tätigen Rangierpersonal (Kuppler) betriebsvorgabengemäß zyklisch die aktive und fehlerfreie Funktion des Kupplerwarnanlage akustisch zu signalisieren. Bei Ausfall der Verbindung zum Ablaufsteuerrechner (2) (eine Überwachungskenngröße liefert den Status dafür) gibt oder auf eine Störungsmeldung des Ablaufsteuerrechner hin erzeugt der Kommunikationsserver (7) selbständig eine akustische dem Ereignistyp Ausfallwarnung" zugeordnete Meldung zur Ausgabe auf den betroffenen dezentralen Rangierfunk-Endgeräten.
Die proprietären Überwachungsalgorithmen des zentralen Ablaufsteuerrechners (2) hingegen generieren immer dann eine Ausfallwarnung, sobald die ausgesandten Telegramme (und zur Überwachung ausgesandten Telegrammwiederholungen) nicht in der vorgesehenen Zeit durch die dezentralen Mobilfunk-Endgeräte (10) (hier Rangierfunk-Endgeräte) quittiert wurden. Da die verwendeten Rangierfunk-Endgeräte (10), wie bereits in der Einleitung beschrieben, keine Leistungsmerkmale zum selbständigen Quittieren der eingehenden Meldungen aufweisen, kommt auch hier dem Kommunikationsserver (7) eine diesen Mangel kompensierende Funktion zu.
Dazu überwacht die Software des Kommunikationsservers (7) ständig die über das Mobilfunknetz (9) hergestellten Verbindungen zu den dezentralen Rangierfunk-Endgeräten (10) einschließlich der GSM-R-Funkverbindungen (11). Mittels Auswertung (Analyse) der vom digitalen Mobilfunknetz (9) bereitgestellten, den Verbindungszustand charakterisierenden Signalisierungsinformationen erzeugt der Kommunikationsserver (7) daraus einzelne, im Kommunikationsserver geführte Überwachungskenngrößen (wie z. B. Status für jede Verbindung). Weitere Überwachungskenngrößen generieren interne Überwachungsroutinen des Kommunikationsservers (7).
Die generierten Überwachungskenngrößen werden anschließend dazu verwendet, mit Hilfe der Software des Kommunikationsservers (7) die vom Ablaufsteuerrechner ausgesandten proprietären Datentelegramme mit positivem oder negativem Resultat ("in Vertretung" der Rangierfunk-Endgeräte (10)) zu quittieren sowie negative Statusinformationen des Kommunikationsservers (7) und der Mobilfunknetzes (9) ("in Vertretung" des analogen Funkteils (3)) an den Ablaufsteuerrechner (2) und dessen prorietären Überwachungsalgorithmen zu übertragen. Die generierten Überwachungskenngrößen werden dabei vom Kommunikationsserver (7) unter Beachtung der prorietären Telegrammformate in die Quittungstelegramme eingebracht.
Zusätzlich verfügt der Kommunikationsserver (7) über die Fähigkeit, basierend auf den generierten Überwachungskenngrößen eine abgebrochene, über das Mobilfunknetz (9) hergestellte Verbindung zu einem dezentralen Rangierfunk-Endgerät (10) zu erkennen und im Bedarfsfalls selbständig den vordefinierten Netzdienst und Verbindung sofort neu zu aktivieren.
Nach Abschluss der Arbeiten im Richtungsgleis meldet sich der Kuppler beim Bergmeister (1) mittels Sprechfunk über das GSM-R Mobilfunknetz ab, woraufhin der Bergmeister die Kupplerwarnanlage deaktiviert. Eine entsprechende Deaktivierungsmeldung wird analog zum oben beschriebenen Aktivierungsvorgang am Rangierfunkgerät ausgegeben.
Eine ähnliche Ausgestaltung sieht die Verwendung eines Gruppenrufes für die jeweilige Örtlichkeit (zugewiesenes Richtungsgleis) vor, über den gleichzeitig (über eine Verbindung zwischen Kommunikationsserver und Mobilfunknetz) mehrer Rangierfunk-Endgeräte angesprochen werden können.

### Bezugszeichenliste

- 1: Arbeitsplatz des Bergmeisters
- 2: Ablaufsteuerrechner
- 3: Funkteil Ablaufsteuerrechner
- 4: Analoges Sprechfunkgerät des Rangierarbeiters / Kupplers
- 5: serielle Schnittstelle (RS 232)
- 6: Funkverbindung zwischen zentraler Steuereinheit und dezentralem Sprechfunkgerät
- 7: Kommunikationsserver
- 8: ISDN-Schittstelle zwischen Kommunikationsserver und digitalem Mobilfunknetz
- 9: Digitales Mobilfunknetz
- 10: Dezentrales digitales Mobilfunk-Endgerät (digitales Rangierfunk-Endgerät) des Rangierarbeiters / Kupplers
- 11: GSM-R-Funkverbindung zwischen digitalem Mobilfunknetz und dezentralen Mobilfunk-Endgerät
- 12: Vielzahl möglicher Gruppenruf-Bereiche
- 13: Mobilfunkvermittlungsstelle (MSC) des Mobilfunknetzes
- 14: Funk-Basisstationssteuerung (BSC) des Mobilfunknetzes
- 15: Funkbasisstation (BTS) des Mobilfunknetzes
- 16: Fernsprecher / Sprechstelle des Bergmeisters
- 17: ISDN-Verbindung zwischen Fernsprecher / Sprechstelle des Bergmeisters und Kommunikationsserver

## Patentansprüche

1. Verfahren zur Übertragung und Anzeige von auf zentralen Systemen der Leit- und Sicherungstechnik (2) erzeugten, Adressierungs- und Nutzinformationen enthaltenden proprietären Datentelegrammen über digitale Mobilfunknetze (9, 11) auf dezentrale Mobilfunk-Endgeräte (10), unter Verwendung eines das zentrale System mit dem digitalen Mobilfunknetz verbindenden Kommunikationsservers (7), der die Adressierungs- und Nutzinformationen aus den vom zentralen System ausgegebenen proprietären Datentelegrammen separiert und extrahiert, die Adressierungsinformationen in durch das digitale Mobilfunksystem auswertbare Adressierungen umwandelt sowie die Nutzinformationen in durch das digitale Mobilfunksystem übertragbare Informationsarten umwandelt, wobei durch den Kommunikationsserver in Abhängigkeit von den vom zentralen System ausgegebenen Nutz- und Adressierungsinformationen vordefinierte Netzdienste des digitalen Mobilfunknetzes für ein oder mehrere dezentrale Mobilfunk-Endgeräte selektiert und aktiviert bzw. deaktiviert werden, sowie die nach erfolgreicher Aktivierung eines Netzdienstes vom zentralen System an den Kommunikationsserver ausgegebenen Datentelegramme durch den Kommunikationsserver mittels Analyse ihrer Nutzinformationen vordefinierten Ereignistypen zugewiesen und diese Ereignistypen durch den Kommunikationsserver über die aktivierten vordefinierten Netzdienste übertragen werden,
**dadurch gekennzeichnet, dass**
im Kommunikationsserver (7) aus Statusinformationen des Kommunikationsservers und Signalisierungsinformationen des digitalen Mobilfunksystems (9, 11) Kenngrößen zur Überwachung der einzelnen Komponenten und Übertragungskanäle des digitalen Mobilfunksystems oder
aus Status- und Signalisierungsinformationen des Kommunikationsservers Kenngrößen zur Überwachung der einzelnen Komponenten und Funktionalitäten des Kommunikationsservers generiert werden.

2. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach Anspruch 1, **dadurch gekennzeichnet, dass** die vom zentralen System (2) ausgegebenen proprietären Adressierungsinformationen mittels des Kommunikationsservers (7) in Ziel-Rufnummern der angesprochenen dezentralen Mobilfunk-Endgeräte (10) und / oder in selektive Gruppen- und / oder Sammelrufnummerierungen, denen die angesprochenen dezentralen Mobilfunk-Endgeräte zugehören, umgewandelt werden.

3. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach einem der Ansprüche 1 oder 2, **dadurch gekennzeichnet, dass** die durch den Kommunikationsserver (7) in Abhängigkeit der vom proprietären zentralen System (2) ausgegebenen Nutzinformationen zugewiesenen Ereignistypen in Sprachmeldungen oder Töne umgewandelt werden.

4. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach einem der Ansprüche 1 bis 3, **dadurch gekennzeichnet, dass** die Kenngrössen zur Überwachung des digitalen Mobilfunksystems (9, 11) durch den Kommunikationsserver (7) in auf dem zentralen System (2) implementierte proprietäre Überwachungsalgorithmen eingebracht werden.

5. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach mindestens einem der Ansprüche 1 bis 4, **dadurch gekennzeichnet, dass** die beim Absetzen von an den Kommunikationsserver (7) gerichteten Rufen der dezentralen Mobilfunk-Endgeräte (10) über das digitale Mobilfunknetz (9, 11) bereitgestellten Signalisierungsinformationen als Konfigurationsdaten zur Herstellung von Rufgruppen- und / oder Ortsbezügen der dezentralen Mobilfunk-Endgeräte im Kommunikationsserver gespeichert werden.

6. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach mindestens einem der Ansprüche 1 bis 5, **dadurch gekennzeichnet, dass** vom zentralen System (2) ausgesandte Datentelegramme zur Überprüfung der Funktionsfähigkeit eines dezentrale Mobilfunk-Endgerätes (10) durch den Kommunikationsserver nach Auswertung der im Kommunikationsserver (7) vorliegenden Statusinformationen bezüglich des digitalen Mobilfunknetzes (9, 11) sowie des dezentralen Mobilfunk-Endgerätes bei Bestehen einer aktiven Verbindung zwischen Kommunikationsserver und dezentralem Mobilfunk-Endgerät quittiert werden, wobei durch den Kommunikationsserver seitens des zentralen Systems verarbeitbare Statusmeldungen generiert und an das zentrale System übertragen werden.

7. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach mindestens einem der Ansprüche 1 bis 6, **dadurch gekennzeichnet, dass** im Kommunikationsserver mittels einer zusätzlichen Funktionalität als Nebenstellenanlage eine Sprachverbindung zwischen einem Bediener des zentralen Systems und mindestens einem dezentralen Mobilfunk-Endgerät vermittelt und übertragen wird.

8. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach Anspruch 7, **dadurch gekennzeichnet, dass** im Kommunikationsserver (7) ein Sprachruf zu einem dezentralen Mobilfunk-Endgerät (10) auf den für eine bestehende Verbindung zwischen dem zentralen System (2) und dem dezentralen Mobilfunk-Endgerät genutzten Kanal aufgeschaltet wird.

9. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach Anspruch 8, **dadurch gekennzeichnet, dass** im Kommunikationsserver (7) ein Prioritätsvergleich zwischen der Priorität des zusätzlichen Sprachrufes und der Priorität der über den aktivierten Netzdienst zu übertragenden Ereignistypen vorgenommen und die niedriger priorisierte Übertragung unterdrückt oder unterbrochen wird.

10. Verfahren zur Übertragung und Anzeige von auf zentralen Systemen der Leit- und Sicherungstechnik erzeugten proprietären Datentelegrammen über digitale Mobilfunknetze auf dezentrale Mobilfunk-Endgeräte nach mindestens einem der Ansprüche 7 bis 9, **dadurch gekennzeichnet, dass** im Kommunikationsserver (7) ein Sprachruf zu einem dezentralen Mobilfunk-Endgerät auf einen zur bestehenden Verbindung des Endgerätes mit dem zentralen System redundanten zweiten Kanal aufgeschaltet wird.

## Claims

1. A method for transmitting and displaying proprietary data telegrams that are prepared on central installations of the control and safety system (2) and contain addressing information and payloads to/on distributed mobile communication terminals (10) via digital mobile networks by utilizing a communication server that connects the central system to the digital mobile network as well as separates and extracts the addressing information and payloads from the proprietary data telegrams transmitted by the central system, wherein the communication server converts the addressing information into addresses that can be evaluated by the digital mobile network and the payloads into information types that can be transmitted via the mobile communication system, wherein the communication server selects and activates or deactivates the network services of the digital mobile network that are predefined by the payload and addressing information transmitted by the central system, and wherein the data telegrams transmitted from the central system to the communication server after the successful activation of a network service are assigned to predefined event types by the communication server based on an analysis of the payload and these event types are transmitted by the communication server via the activated predefined network services,
**characterized in that**
parameters for monitoring the individual components and transmission channels of the digital communication system are generated in the communication server (7) from status information of the communication server and signaling information of the digital mobile communication system (9, 11) or
parameters for monitoring the individual components and functions of the communication server are generated from status and signaling information of the communication server.

2. The method according to Claim 1 for transmitting and displaying proprietary data telegrams prepared on central installations of the control and safety system to/on distributed mobile communication terminals via digital mobile networks, **characterized in that** the communication server (7) converts the proprietary addressing information transmitted by the central system (2) into destination call numbers of the distributed mobile communication terminals (10) to be addressed and/or into selective multi-party and/or collective call numbers belonging to the distributed mobile communication terminals to be addressed.

3. The method according to Claim 1 or 2 for transmitting and displaying proprietary data telegrams prepared on central installations of the control and safety system to/on distributed mobile communication terminals via digital mobile networks, **characterized in that** the event types assigned by the communication server (7) in dependence on the payloads transmitted by the proprietary central system (2) are converted into voice messages or sounds.

4. The method according to one of Claims 1 to 3 for transmitting and displaying proprietary data telegrams prepared on central installations of the control and safety system to/on distributed mobile communication terminals via digital mobile networks, **characterized in that** the parameters for monitoring the digital mobile communication system (9, 11) are incorporated into a proprietary monitoring algorithms implemented on the central system (2) by the communication server (7).

5. The method according to at least one of Claims 1 to 4, for transmitting and displaying proprietary data telegrams prepared on central installations of the control and safety system to/on distributed mobile communication terminals via digital mobile networks, **characterized in that** the signaling information made available when establishing calls from the distributed mobile communication terminals (10) to the communication server (7) via the digital mobile network (9, 11) are stored in the communication server in the form of configuration data for preparing multi-party call references and/or positional references of the distributed mobile communication terminals.

6. The method according to at least one of Claims 1 to 5 for transmitting and displaying proprietary data telegrams prepared on central installations of the control and safety system to/on distributed mobile communication terminals via digital mobile networks, **characterized in that** data telegrams transmitted by the central system (2) are acknowledged by the communication server in order to check the operatability of a distributed radio communication terminal (10) after the status information on the digital mobile network (9, 11) and on the distributed mobile communication terminal stored in the communication server is evaluated, namely when an active connection between the communication server and the distributed mobile communication terminal is established, wherein the communication server generates status messages that can be processed by the central system and said status messages are transmitted to the central system.

7. The method according to at least one of Claims 1 to 6 for transmitting and displaying proprietary data telegrams prepared on central installations of the control and safety system to/on distributed mobile communication terminals via digital mobile networks, **characterized in that** a voice connection between an operator of the central system and at least one distributed mobile communication terminal is established and used for transmission purposes in the communication server that also fulfills the additional function of a private branch exchange.

8. The method according to Claim 7 for transmitting and displaying proprietary data telegrams prepared on central installations of the control and safety system to/on distributed mobile communication terminals via digital mobile networks, **characterized in that** a voice call to the distributed mobile communication terminal (10) is established in the communication server (7) on the channel that is used for an existing connection between the central system (2) and the distributed mobile communication terminal.

9. The method according to Claim 8 for transmitting and displaying proprietary data telegrams prepared on central installations of the control and safety system to/on distributed mobile communication terminals via digital mobile networks, **characterized in that** a priority comparison between the priority of the additional voice call and the priority of the event types to be transmitted via the active network service is carried out in the communication server (7), wherein the transmission of lower priority is suppressed or interrupted.

10. The method according to at least one of Claims 7 to 9 for transmitting and displaying proprietary data telegrams prepared on central installations of the control and safety system to/on distributed mobile communication terminals via digital mobile networks, **characterized in that** a voice call to a distributed mobile communication terminal is established in the communication server (7) on a second channel that is redundant referred to the existing connection between the terminal and the central system.

## Revendications

1. Procédé de transmission et d'affichage de télégrammes de données privés générés sur des systèmes centralisés de technique de direction et de sécurité (2) contenant des informations d'adressage et utiles par des réseaux de radio mobile numériques (9, 11) vers des appareils terminaux de radio mobile décentralisés (10) en utilisant un serveur de communication (7) reliant le système centralisé au réseau de radio mobile numérique, qui sépare et extrait les informations d'adressage et utiles des télégrammes de données privés générés par le système centralisé, convertit les informations d'adressage en adressages exploitables par le système de radio mobile numérique en types d'informations transmissibles par le système de radio mobile numérique, tandis que des services de réseau du réseau de radio mobile prédéfinis pour un ou plusieurs appareils terminaux de radio mobile décentralisés sont sélectionnés et activés ou désactivés par le serveur de communication en fonction des informations utiles et d'adressage émises par le système centralisé et qu'une fois qu'il y a eu une activation d'un service de réseau, des télégrammes de données émis par le système centralisé vers le serveur de communication sont associés par le serveur de communication, par analyse de leurs informations utiles, à des types d'événements prédéfinis et que ces types d'événements sont transmis par le serveur de communication par les services de réseau prédéfinis activés,
**caractérisé en ce que**
il est généré dans le serveur de communication (7), à partir des informations d'état du serveur de communication et des informations de signalisation du système de radio mobile numérique (9,11), des paramètres de surveillance des différents composants et canaux de transmission du système de radio mobile numérique ou
qu'il est généré, à partir des informations d'état et de signalisation du serveur de communication, des paramètres de surveillance des différents composants et fonctionnalités du serveur de communication.

2. Procédé de transmission et d'affichage de télégrammes de données privés générés sur des systèmes centralisés de technique de direction et de sécurité par des réseaux de radio mobile numériques vers des appareils terminaux de radio mobile numériques selon la revendication 1, **caractérisé en ce que** les informations d'adressage privées générées par le système centralisé (2) sont converties au moyen du serveur de communication (7) en numéros d'appel de destination des appareils terminaux de radio mobile décentralisés contactés et/ou en numérotations sélectives de numéros d'appels de groupes et/ou de collectifs dont font partie les appareils terminaux de radio mobile (10) décentralisés contactés.

3. Procédé de transmission et d'affichage de télégrammes de données privés générés sur des systèmes centralisés de technique de direction et de sécurité par des réseaux de radio mobile numériques vers des appareils terminaux de radio mobile numériques selon une des revendications 1 ou 2, **caractérisé en ce que** les types d'événements associés aux informations utiles émises par le serveur de communication (7) en fonction des informations utiles émises par le système centralisé privé (2) sont convertis en messages vocaux ou en sons.

4. Procédé de transmission et d'affichage de télégrammes de données privés générés sur des systèmes centralisés de technique de direction et de sécurité par des réseaux de radio mobile numériques vers des appareils terminaux de radio mobile numériques selon la revendication selon une des revendications 1 à 3, **caractérisé en ce que** les paramètres de surveillance du système de radio mobile numérique (9, 11) sont intégrés par le serveur de communication (7) dans des algorithmes de surveillance privés mis en oeuvre par le serveur de communication (7) sur le système centralisé (2).

5. Procédé de transmission et d'affichage de télégrammes de données privés générés sur des systèmes centralisés de technique de direction et de sécurité par des réseaux de radio mobile numériques vers des appareils terminaux de radio mobile numériques selon au moins une des revendications 1 à 4, **caractérisé en ce que** les informations de signalisation fournies lors de l'émission d'appels dirigés vers le serveur de communication (7) des appareils terminaux de radio mobile (10) par le réseau de radio mobile numérique (9, 11) sont sauvegardées en tant que données de configuration pour l'établissement de références de groupes d'appels et/ou de localisation des appareils terminaux de radio mobile décentralisés dans le serveur de communication.

6. Procédé de transmission et d'affichage de télégrammes de données privés générés sur des systèmes centralisés de technique de direction et de sécurité par des réseaux de radio mobile numériques vers des appareils terminaux de radio mobile numériques selon au moins une des revendications 1 à 5, **caractérisé en ce que** les télégrammes de données envoyés par le système centralisé (2) pour le contrôle de la fonctionnalité d'un appareil terminal de radio mobile décentralisé (10), après exploitation des informations d'état présentes dans le serveur de communication (7), sont confirmés par le serveur de communication (7) au niveau du réseau de radio mobile numérique (9, 11) ainsi que de l'appareil terminal de radio mobile décentralisé en cas d'existence d'une connexion active entre le serveur de communication et l'appareil terminal de radio mobile décentralisé, des messages d'état pouvant être traités par le système centralisé étant générés par le serveur de communication et envoyés au système centralisé.

7. Procédé de transmission et d'affichage de télégrammes de données privés générés sur des systèmes centralisés de technique de direction et de sécurité par des réseaux de radio mobile numériques vers des appareils terminaux de radio mobile numériques selon au moins une des revendications 1 à 6, **caractérisé en ce que**, dans le serveur de communication, au moyen d'une fonctionnalité supplémentaire sous forme d'une installation de point auxiliaire, une connexion vocale entre un utilisateur du système centralisé et au moins un appareil terminal de radio mobile décentralisé est établie et transmise.

8. Procédé de transmission et d'affichage de télégrammes de données privés générés sur des systèmes centralisés de technique de direction et de sécurité par des réseaux de radio mobile numériques vers des appareils terminaux de radio mobile numériques selon la revendication 7, **caractérisé en ce que**, dans le serveur de communication (7), un appel vocal vers un appareil terminal de radio mobile décentralisé (10) est lancé sur le canal utilisé pour une connexion existante entre le système centralisé (2) et l'appareil terminal de radio mobile décentralisé.

9. Procédé de transmission et d'affichage de télégrammes de données privés générés sur des systèmes centralisés de technique de direction et de sécurité par des réseaux de radio mobile numériques vers des appareils terminaux de radio mobile numériques selon la revendication 8, **caractérisé en ce que**, dans le serveur de communication (7), une comparaison de priorité est effectuée entre la priorité de l'appel vocal supplémentaire et la priorité des types d'événements à transmettre par le service de réseau activé et que la transmission ayant la plus faible priorité est retenue ou interrompue.

10. Procédé de transmission et d'affichage de télégrammes de données privés générés sur des systèmes centralisés de technique de direction et de sécurité par des réseaux de radio mobile numériques vers des appareils terminaux de radio mobile numériques selon au moins une des revendications 7 à 9, **caractérisé en ce que**, dans le serveur de communication (7), un appel vocal vers un appareil terminal de radio mobile décentralisé (10) est lancé sur un deuxième canal redondant par rapport à la connexion existante de l'appareil terminal avec le système centralisé.
